# EUROPÄISCHE PATENTSCHRIFT

(11) **EP 2 219 880 B1**
(45) Veröffentlichungstag und Bekanntmachung des Hinweises auf die Patenterteilung: **21.05.2014**
(21) Anmeldenummer: 08850588.8
(22) Anmeldetag: 20.10.2008
(51) Int. Cl.: B42D 25/00, G06K 19/077, G09F 9/00, G09G 3/00, B60R 13/10, G07D 7/00, G07F 7/08

(54) **DOKUMENT MIT EINER INTEGRIERTEN ANZEIGEVORRICHTUNG UND LESEGERÄT**
DOCUMENT COMPRISING A BUILT-IN DISPLAY DEVICE AND READING APPARATUS
DOCUMENT À DISPOSITIF D'AFFICHAGE INTÉGRÉ ET APPAREIL DE LECTURE

(30) Priorität: 12.11.2007 DE 102007000879
(43) Veröffentlichungstag der Anmeldung: 25.08.2010
(73) Patentinhaber: Bundesdruckerei GmbH, 10958 Berlin (DE)
(72) Erfinder: DIETRICH, FRANK, 12437 Berlin (DE); FRITZE, FRANK, 12487 Berlin (DE); FISCHER, JÖRG, 13053 Berlin (DE); PAESCHKE, MANFRED, 16348 Wandlitz (DE); DRESSEL, Olaf, 14641 Westermark (DE); PFLUGHOFFT, Malte, 13347 Berlin (DE)
(74) Vertreter: Richardt Patentanwälte PartG mbB
(86) Internationale Anmeldenummer: PCT/EP2008/064096
(87) Internationale Veröffentlichungsnummer: WO 2009/062810

(56) Entgegenhaltungen:
- EP-A- 1 341 121
- WO-A-2006/061171
- WO-A2-2005/082671
- WO-A2-2008/003595
- DE-A1- 10 109 126
- DE-A1- 19 904 686
- DE-A1-102005 025 806
- DE-A1-102005 030 626
- DE-A1-102005 030 628
- DE-U1- 29 615 926
- DE-U1-202005 007 342
- US-A1- 2005 161 501

## Beschreibung

Die Erfindung betrifft ein Wert- oder Sicherheitsdokument mit einer integrierten Anzeigevorrichtung, ein Lesegerät und ein Verfahren zur Verifikation eines Dokuments.

Dokumente mit einer integrierten elektronischen Schaltung sind aus dem Stand der Technik an sich in verschiedener Form bekannt. Beispielsweise gibt es Wert- und Sicherheitsdokumente in überwiegend papierbasierter Form, wie zum Beispiel als Banknote, als elektronischen Reisepass, oder als kunststoffbasierte Chipkarte, insbesondere als sogenannte Smart Card, in kontaktbehafteter, kontaktloser oder Dual-Interface Ausführung. Hierzu wird insbesondere auf die DE 10 2005 025 806 verwiesen.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät, Leseeinrichtung oder Reader bezeichnet. Ferner ist oft die Integration mit Servern, Diensten und sonstigen Systemen, wie zum Beispiel Kässensystemen oder Warenwirtschaftssystemen über eine so genannte Middle Ware vorgesehen.

Die auf einem kontaktlosen, beispielsweise einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente können eine integrierte Anzeigevorrichtung aufweisen, wie es z.B. aus DE 10 2005 030 626 A1, DE 10 2005 030 627 A1, DE 10 2005 030 628 A1, WO 2004/080100 A1, EP 1 023 692 B1, DE 102 15 398 B4, EP 1 173 825 B1, EP 1 230 617 B1, EP 1 303 835 B1, EP 1 537 528 B1, WO 03/030096 A1, EP 0 920 675 B1, US 6,019,284, US 6,402,039 B1, WO 99/38117 bekannt ist.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und -verfahren sind zum Beispiel in der Norm ISO 7816, ISO 14443, ISO 15763 festgelegt.

Ein Nachteil solcher Dokumente mit RFID-Funktionalität ist, dass ohne Einverständnis des Trägers des Dokuments die RFID-Schnittstelle angesprochen werden kann. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Document", Technical Report, PKI for Machine Readable Travel Documents Offering ICC Read-Only Access, Version 1.1, Oktober 01, 2004, International Civil Aviation Organisation (ICAO). Ein Verfahren für den besonderen Schutz biometrischer Daten, d.h. die sog. Extended Access Control, ist beispielsweise aus der oben bereits genannten DE 10 2005 025 806 bekannt.

Aus EP 1 341 121 A1 ist eine Transaktionskarte mit einem Speicher und einem Flüssigkeitskristall-Display bekannt.

Aus WO 2006/061171 A2 ist ein optisch variables Element mit elektrisch aktiver Schicht bekannt sowie ein Polymerdisplay mit alphanumerischen AnzeigeElementen, wobei jedes der Anzeige-Elemente jeweils ein alphanumerisches Zeichen bildet.

Aus dem nach veröffentlichten Dokument WO 2008/003595 A2, welches der zum Anmeldezeitpunkt unveröffentlichten Patentanmeldung DE 10 2006 031 422.0-53 derselben Anmelderin entspricht, ist ein Wert- oder Sicherheitsdokument mit einer Anzeigevorrichtung zur Ausgabe eines maschinenlesbaren optischen Signals, welches durch einen Benutzer nicht kognitiv erfassbar ist, bekannt.

Aus WO 2007/137555 A2 ist ein elektronische konfigurierbares Kraftfahrzeug-Kennzeichen mit einem Display bekannt. Um das Kraftfahrzeug-Kennzeichen zu konfigurieren, werden Daten in einer externen Konfigurationseinheit zusammengestellt und verschlüsselt. Die verschlüsselten Daten werden von einem in die Konfigurationseinheit integrierten Infrarot-Sender als Infrarot-Signale ausgesendet. In der Anzeigeelektronik für das Kraftfahrzeug-Kennzeichen werden die Signale entschlüsselt, wofür eine entsprechende Entschlüsselungs-Software in der Anzeigeelektronik gespeichert ist. Weitere elektronische Kraftfahrzeug-Kennzeichen sind bekannt aus US 5,657,008 und WO 2005/082671 A2, welches dem nach veröffentlichten Dokument US 2007/0285361 A1 entspricht.

Der Erfindung liegt dem gegenüber die Aufgabe zu Grunde, ein verbessertes Dokument, ein Lesegerät mit dem Dokument und ein Verfahren zur Verifikation des Dokuments zu schaffen.

Die der Erfindung zu Grunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen eines erfindungsgemäßen Dokuments beinhalten eine integrierte Anzeigevorrichtung sowie einen elektronischen Speicher zur Speicherung erster und zweiter Daten. Durch Ansteuerungsmittel des Dokuments wird die Anzeigevorrichtung zur Wiedergabe der ersten Daten angesteuert, sodass ein Benutzer die Wiedergabe visuell erfassen kann. Ferner sind die Ansteuerungsmittel zur Ansteuerung eines Teilbereichs der Anzeigevorrichtung ausgebildet, um die zweiten Daten über den Teilbereich auszugeben. Die Größe des Teilbereichs ist dabei so gewählt, dass die Ausgabe der zweiten Daten über den Teilbereich ohne technische Hilfsmittel visuell nicht wahrnehmbar ist.

Dies hat den Vorteil, dass die Anzeigevorrichtung neben der Wiedergabe der ersten Daten zur visuellen Erfassung durch einen Benutzer auch zur Ausgabe der zweiten Daten dient, und zwar so, dass die Ausgabe der zweiten Daten visuell durch einen Benutzer nicht wahrgenommen wird. Insbesondere kann hierdurch ein Sicherheitsmerkmal zum verbesserten Schutz des Dokuments gegen Fälschungen realisiert sein. Alternativ oder zusätzlich dient die Ausgabe der zweiten Daten über den Teilbereich zur Kommunikation mit einem Lesegerät, beispielsweise zur Übertragung einer Personalisierungsinformation und/oder eines kryptographischen Schlüssels.

Erfindungsgemäß handelt es sich bei dem Teilbereich um eine einzelne Zeile der Anzeigevorrichtung. Wenn die Anzeigevorrichtung beispielsweise 512 Zeilen aufweist, so dienen davon 511 Zeilen zur Wiedergabe der ersten Daten. Die verbleibende Zeile dient dagegen zur Ausgabe der zweiten Daten in Form eines maschinenlesbaren optischen Signals. Die von der Wiedergabe der ersten Daten abweichende Ansteuerung dieser einzelnen Zeile der Anzeigevorrichtung kann von einem Benutzer visuell nicht oder kaum wahrgenommen werden. Alternativ oder zusätzlich kann auch eine einzelne Spalte der Anzeigevorrichtung zur Ausgabe der zweiten Daten verwendet werden.

Bevorzugt ist eine Ausführungsform, bei der das Lesegerät eine Nachricht an das Dokument überträgt, in welchem Teilbereich die zweiten Daten ausgegeben werden sollen. Diese Nachricht kann den Teilbereich durch Angabe einer Zeile, einer Spalte, durch Angabe von Zeilen/Spaltenkoordinaten, die den Teilbereich begrenzen, oder durch Spezifizierung eines beliebigen anderen Musters und dessen Lage bestimmen. Das Dokument gibt die zweiten Daten nach Empfang dieser Nachricht von dem Lesegerät in dem in der Nachricht angegebenen Teilbereich aus. Der Teilbereich kann beispielsweise mit Hilfe eines Zufallsgenerators von dem Lesegerät ausgewählt werden.

Nach einer Ausführungsform der Erfindung ist der Teilbereich der Anzeigevorrichtung, der für die Ausgabe der zweiten Daten verwendet wird, an einem Rand der Anzeigevorrichtung angeordnet. Beispielsweise wird als Teilbereich die oberste oder unterste Zeile und/oder die äußerst linke und/oder äußerst rechte Spalte der Anzeigevorrichtung verwendet. Dies hat den Vorteil, dass die Wiedergabe der ersten Daten durch die Ausgabe der zweiten Daten in dem Teilbereich am wenigsten beeinflusst wird.

Nach einer Ausführungsform der Erfindung wird der Teilbereich der Anzeigevorrichtung durch ein einzelnes Anzeigeelement gebildet. Dieses einzelne Anzeigeelement wird also nicht zur Wiedergabe der ersten Daten angesteuert, sondern zur Ausgabe der zweiten Daten. Die Ansteuerungsmittel steuern also dieses einzelne Anzeigeelement so an, dass es ein maschinenlesbares optisches Signal absendet, welches die zweiten Daten beinhaltet.

Die zweiten Daten können auf eine von dem Anzeigeelement abgestrahlte optische Trägerwelle nach einem geeigneten Modulationsverfahren aufmoduliert sein, beispielsweise nach einem Pulscode-Modulationsverfahren, einem Amplituden-Modulationsverfahren, einem Frequenz-Modulationsverfahren und/oder eines Phasen-Modulationsvertahrens.

Nach einer Ausführungsform der Erfindung wird der Teilbereich des Dokuments durch mehrere der Anzeigeelemente gebildet, die nicht unmittelbar benachbart angeordnet sind. Beispielsweise wird ein relativ geringer Anteil von höchstens einem oder zwei Prozent der Anzeigeelemente der Anzeigevorrichtung für die Ausgabe der zweiten Daten verwendet. Diese Anzeigeelemente können nach einem vorgegebenen Muster oder zufällig auf der Anzeigevorrichtung verteilt sein. Hierbei kann bereits die Anordnung der Anzeigeelemente zumindest ein Teil der Information darstellen; zum Beispiel kann es sich hierbei um ein Wappen, Siegel oder dergleichen handeln.

Nach einer Ausführungsform der Erfindung erfolgt die Ausgabe der zweiten Daten in dem Teilbereich durch Wiedergabe eines Musters. Bei diesem Muster kann es sich zum Beispiel um einen eindimensionalen Barcode handeln. Das Muster kann zeitlich veränderlich sein. Vorzugsweise wird ein solches Muster während einer Bildwiederholperiode der Anzeigevorrichtung wiedergegeben.

Grundsätzlich können erfindungsgemäß sämtliche bekannte Modulationsverfahren für die Modulation der von dem Teilbereich abgesendeten Strahlung eingesetzt werden. Bevorzugt wird ein Modulationsverfahren gewählt, bei dem die Modulation so erfolgt, dass sie visuell mit dem bloßen Auge nicht oder kaum wahrnehmbar ist. Ein Benutzer nimmt mit dem bloßen Auge also lediglich die Wiedergabe der ersten Daten auf der Anzeigevorrichtung wahr, ohne die ergänzende Modulation zur Übertragung der zweiten Daten auf der Anzeigevorrichtung visuell wahrzunehmen.

Erfindungsgemäß handelt es sich bei der in das Dokument integrierten Anzeigevorrichtung um ein Aktiv- oder Passiv-Matrixdisplay.

Insbesondere kann es sich bei der Anzeigevorrichtung um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Die ersten Daten können verschiedene Inhalte beinhalten, die zur Erzeugung einer Bildwiedergabe auf der Anzeigevorrichtung geeignet sind, das heißt, beispielsweise digitale Bitdaufnahmen, insbesondere Gesichtsbilder einer Person, Wappen, Siegel, textuelle Angaben und Barcodes. Insbesondere bei einer Ausführungsform des Dokuments als elektronisches Kennzeichen, insbesondere als elektronisches Kraftfahrzeugkennzeichen, kann es sich bei den ersten Daten um ein amtliches Kennzeichen handeln, welches auf der Anzeigevorrichtung wiedergegeben wird.

Nach einer Ausführungsform der Erfindung beinhalten die zweiten Daten eine Information, wie zum Beispiel eine Personalisierungsinformation, ein Sicherheitsmerkmal, einen kryptographischen Schlüssel, einen Fahrzeugparameter und/oder einen Gebührenstatus.

Bei den Personalisierungsinformationen kann es sich beispielsweise um Angaben bezüglich des Trägers des Dokuments handeln, wie zum Beispiel dessen Namen, Wohnort, Größe, Alter, Geschlecht und Gewicht. Diese Angaben können bei der Wiedergabe der zweiten Daten im Klartext auf der Anzeigevorrichtung angezeigt werden.

Nach einer Ausführungsform der Erfindung handelt es sich bei der Information um ein Sicherheitsmerkmal, wie zum Beispiel ein Wappen oder Siegel. Diese Information wird bei der Wiedergabe der ersten Daten durch die Modulation von der Anzeigevorrichtung gesendet.

Nach einer Ausführungsform der Erfindung handelt es sich bei der Information um einen kryptographischen Schlüssel. Bei dem kryptographischen Schlüssel kann es sich um einen symmetrischen oder um einen asymmetrischen Schlüssel handeln. Der kryptographische Schlüssel wird von dem Lesegerät erfasst, so dass das Lesegerät zusammen mit dem Dokument ein kryptographisches Protokoll ausführen kann.

Nach einer Ausführungsform der Erfindung handelt es sich bei der Information um einen Fahrzeugparameter und/oder einen Gebührenstatus des Kraftfahrzeugs. Das Dokument, insbesondere in der Ausführungsform als elektronisches Kraftfahrzeugkennzeichen; kann an dem Kraftfahrzeug oder einem Kraftfahrzeugteil befestigt sein.

Bei dem Fahrzeugparameter kann es sich z.B. um die Geschwindigkeit des Kraftfahrzeugs, einen Lärmpegel oder einen Abgaswert handeln. Insbesondere kann durch die Information ausgegeben werden, welche Schadstoffklasse das Kraftfahrzeug erfüllt, insbesondere gemäß der anwendbaren Feinstaubverordnung.

Durch die Ausgabe des Gebührenstatus kann angezeigt werden, ob für das Kraftfahrzeug die vorgeschriebenen Gebühren, Steuern und/oder Abgaben, insbesondere Mautgebühren, Kraftfahrzeugsteuern und/oder Abgasgebühren, bezahlt worden sind.

Nach einer Ausführungsform der Erfindung hat das Dokument einen geschützten Speicherbereich, in dem weitere Daten gespeichert sind. Ferner hat das Dokument eine Schnittstelle für einen lesenden Zugriff des Lesegeräts auf diese weiteren Daten. Die Schnittstelle kann kontaktbehaftet oder kontaktlos, insbesondere als RFID-Schnittstelle ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Bedingung für einen Lesezugriff des Lesegeräts auf die weiteren Daten ist die zuvorige erfolgreiche Ausführung des kryptographischen Protokolls. Bei dem kryptographischen Protokoll kann es sich zum Beispiel um ein sogenanntes Challenge-Response Verfahren handeln. Durch das kryptographische Protokoll werden die weiteren Daten gegen unerlaubte Zugriffe geschützt. Dies ist besonders vorteilhaft, wenn es sich bei den weiteren Daten um sensitive Daten handelt, wie zum Beispiel biometrische Daten, insbesondere Fingerabdruckdaten oder Iris-Scandaten des Trägers des Dokuments.

Unter einem "Dokument" werden erfindungsgemäß insbesondere Papier basierte und/oder Kunststoff basierte Dokumente verstanden, wie zum Beispiel Ausweisdokumente, insbesondere Reisepässe, Personalausweise, Visa, Führerscheine, Fahrzeugscheine, Fahrzeugbriefe, Firmenausweise, Gesundheitskarten oder andere ID-Dokumente, sowie auch Chipkarten, Zahlungsmittel, insbesondere Bankkarten und Kreditkarten, Frachtbriefe oder sonstige Berechtigungsnachweise.

Unter einem "Dokument" wird auch ein elektronisches Kennzeichen, insbesondere ein elektronisches Kraftfahrzeugkennzeichen, verstanden. Das Dokument kann auch einen integralen Bestandteil eines Transportmittels, insbesondere eines Kraftfahrzeugs, bilden. Beispielsweise kann das Dokument in die Front- bzw. Heckhaube bzw. in das sog. Frontend oder Backend integriert sein, indem dort ein Display erfindungsgemäß eingebracht oder aufgebracht wird.

Das Dokument kann auch metallbasiert sein, insbesondere blechbasiert; es kann also einen Dokumentenkörper aus Blech haben. Es kann aber auch ein Dokumentenkörper aus einem anderen Material haben, wie z.B. aus einem Verbundmaterial, wie er im Fahrzeugbau verwendet wird.

In einem weiteren Aspekt betrifft die Erfindung ein Lesegerät mit einem erfindungsgemäßen Dokument. Das Lesegerät hat einen Sensor zur Erfassung der Anzeigevorrichtung und zum Empfang des von der Anzeigevorrichtung gesendeten optischen Signals.

Nach einer Ausführungsform der Erfindung ist das Lesegerät zur Verifikation des Dokuments mit Hilfe der mittels der Demodulation erfassten Information ausgebildet. Beispielsweise vergleicht das Lesegerät die erfasste Information mit einer Referenz-Information. Eine hinreichende Übereinstimmung zwischen der erfassten Information und der Referenzinformation ist dabei eine Voraussetzung dafür, dass das Dokument als echt anerkannt wird. Nach einer Ausführungsform ist die Referenzinformation auf das Dokument sichtbar aufgebracht; insbesondere kann es sich hierbei um die Personalisierungsinformationen wie Name und Ausweisnummer handeln. Auf diese Weise werden die Personalisierungsinformationen gegen Manipulation geschützt.

Nach einer Ausführungsform der Erfindung hat das Lesegerät Mittel zur Ausführung des kryptographischen Protokolls mittels der durch die Demodulation erfassten Information. Bei dieser Information handelt es sich beispielsweise um einen kryptographischen Schlüssel. Aufgrund der Erfassung des kryptographischen Schlüssels kann das Lesegerät mit dem Dokument das kryptographische Protokoll ausführen. Nach erfolgreicher Durchführung des kryptographischen Protokolls kann das Lesegerät auf einen geschützten Speicherbereich des Dokuments zugreifen, um von dort Daten auszulesen.

Nach einer Ausführungsform der Erfindung ist das Lesegerät zur Erfassung des Dokuments eines vorbeifahrenden Transportmittels ausgebildet; bei dieser Ausführungsform ist das Dokument beispielsweise als elektronisches Kraftfahrzeugkennzeichen ausgebildet. Das Lesegerät kann z.B. zur Erfassung eines Fahrzeugparameters, eines Fahrparameters oder eines Gebührenstatus des Kraftfahrzeugs dienen, insbesondere zur Durchführung von Verkehrskontrollen, Abgaskontrollen und/oder Gebührenkontrollen.

In einem weiteren Aspekt betrifft die Erfindung ein Verfahren zur Verifikation eines erfindungsgemäßen Dokuments. Zur Verifikation des Dokuments wird das von der Anzeigevorrichtung optisch gesendete Signal demoduliert, um eine Information zu erfassen. Die Information wird zur Prüfung der Echtheit des Dokuments mit einer Referenzinformation verglichen.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Dokuments,
- Figur 2a: eine schematische Draufsicht auf eine Ausführungsform eines erfindungsgemäßen Dokuments zu einem ersten Zeitpunkt,
- Figur 2b: die Ansicht der Figur 2a zu einem nachfolgenden zweiten Zeitpunkt,
- Figur 3: eine schematische Draufsicht auf eine erfindungsgemäße Anzeigevorrichtung,
- Figur 4: ein Blockdiagramm einer Ausführungsform eines erfindungsgemäßen Dokuments.

Elemente der nachfolgenden Ausführungsformen, die einander entsprechen, sind mit denselben Bezugszeichen gekennzeichnet.

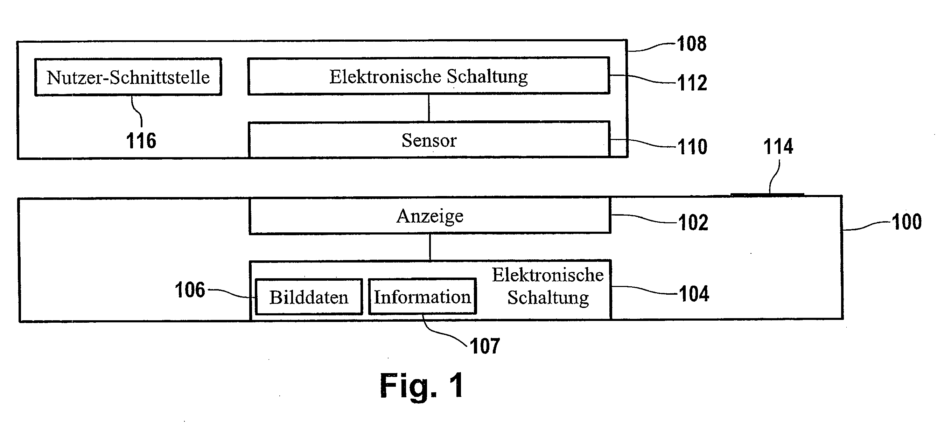

Die Figur 1 zeigt ein Dokument 100 mit einer in dem Dokumentenkörper des Dokuments 100 integrierten Anzeige 102 und eine elektronische Schaltung 104 zur Ansteuerung der Anzeige 102. Die Anzeige 102 beinhaltet eine Vielzahl von Anzeigeelementen, die erfindungsgemäß matrixförmig angeordnet sind, wobei es sich bei der Anzeige 102 um eine Passiv- oder um eine Aktiv-Matrixanzeige handelt.

Die elektronische Schaltung 104 beinhaltet ein oder mehrere elektronische Speicher zur Speicherung von ersten Daten 106 und zweiten Daten 107. Die elektronische Schaltung 104 kann auf die Daten 106 und 107 zugreifen. Insbesondere dient die elektronische Schaltung 104 zum Zugriff auf die Daten 106, um die Anzeige 102 zur Wiedergabe der Daten 106 anzusteuern, so dass ein Benutzer des Dokuments 100 die Wiedergabe der Daten 106 visuell wahrnehmen kann.

Die elektronische Schaltung 104 dient ferner zum Zugriff auf die Daten 106, um die Anzeige 102 zum Senden der zweiten Daten 107 anzusteuern. Hierzu steuert die elektronische Schaltung 104 die Anzeigevorrichtung 102 so an, dass ein optisches Signal abgegeben wird, dass zur Übertragung der zweiten Daten 107 moduliert ist. Diese Modulation ist vorzugsweise so ausgebildet, dass sie durch den Benutzer mit dem bloßen Auge nicht wahrnehmbar ist.

Bei den Daten 106 kann es sich zum Beispiel um Bilddaten handeln. Unter "Bilddaten" werden hier Daten verstanden, die sich zur Wiedergabe auf der Anzeige 102 eignen, das heißt zum Beispiel eine digitale Fotografie oder textuelle Angaben. Die Bilddaten können auch eine Bildsequenz beinhalten, wobei die Bildsequenz z.B. mehrere Gesichtsbilder aus verschiedenen Ansichten aufweisen kann.

Die Daten 107 können ein oder mehrere Informationen beinhalten, wie zum Beispiel Personalisierungsinformationen, ein Sicherheitsmerkmal und/oder einen kryptographischen Schlüssel. Insbesondere kann es sich hierbei um benutzerspezifische Informationen, wie zum Beispiel Informationen über den Träger des Dokuments handeln und/oder Daten bezüglich der Gültigkeit des Dokuments oder der ausstellenden Behörde.

Das Lesegerät 108 hat einen optischen Sensor 110, wie zum Beispiel einen CCD-Sensor oder einen optischen Scanner. Der Sensor 110 ist dazu ausgebildet, das von der Anzeigevorrichtung gesendete modulierte optische Signal zu erfassen.

Der Sensor 110 ist mit einer elektronischen Schaltung 112 des Lesegeräts 108 verbunden. Durch die elektronische Schaltung 112 ist ein Demodulator implementiert. Der Demodulator dient zur Demodulation des optischen Signals, um die in den zweiten Daten beinhaltete Information zu empfangen.

Das Lesegerät 108 hat ferner eine Nutzerschnittstelle 116. Alternativ oder zusätzlich kann das Lesegerät 108 auch eine Schnittstelle zu einem Computer und/oder einem Netzwerk aufweisen.

Wenn die Information durch Demodulation des optischen Signals von dem Lesegerät 108 empfangen worden ist, wird die Information beispielsweise über die Nutzerschnittstelle 116 ausgegeben.

Beispielsweise handelt es sich bei der Information um eine Personalisierungsinformation. Diese Personalisierungsinformation kann auf dem Dokument 100 als Aufdruck 114 im Klartext angegeben sein. Durch Vergleich der über die Nutzerschnittstelle 116 ausgegebenen Personalisierungsinformation mit der auf dem Aufdruck 114 des Dokuments 100 angegebenen Personalisierungsinformation kann also eine Prüfung der Echtheit des Dokuments erfolgen, da die über das modulierte optische Signal von dem Lesegerät 100 empfangene Information mit der auf dem Aufdruck 114 gezeigten Personalisierungsinformation übereinstimmen muss.

Bei der Information kann es sich auch um ein Wappen, Siegel oder ein anderes Sicherheitsmerkmal handeln. Die ein solches Sicherheitsmerkmal repräsentierende Information wird durch das modulierte optische Signal von dem Sensor 110 des Lesegeräts 108 erfasst. Nach Demodulation des optischen Signals wird die empfangene Information mit einer in der elektronischen Schaltung 112 gespeicherten Referenzinformation verglichen. Wenn die optisch empfangene Information mit der Referenzinformation hinreichend übereinstimmt, wird über die Nutzerschnittstelle 116 ein akustisches oder optisches Signal ausgegeben, welches anzeigt, ob das Dokument 100 die Echtheitsprüfung bestanden hat oder nicht.

Die Ausgabe der Daten 107 erfolgt nur über einen Teilbereich der Anzeige 102. Die Größe des Teilbereichs ist so gewählt, dass die Ausgabe der zweiten Daten über den Teilbereich visuell durch einen Benutzer nicht wahrnehmbar ist.

Erfindungsgemäß hat die Anzeige 102 eine größere Anzahl von Zeilen, wie zum Beispiel 128 Zeilen oder ein Vielfaches davon. Wenn nur eine dieser Zeilen für die Ausgabe der zweiten Daten verwendet wird, so ist dies durch einen Benutzer visuell nicht oder kaum wahrnehmbar.

Bei den zweiten Daten 107, d.h. der Information, die von der elektronischen Schaltung 104 über die Anzeige 102 ausgegeben wird, kann es sich auch um einen Fahrzeugparameter und/oder einen Gebührenstatus handeln. Bei dieser Ausführungsform ist das Dokument 100 als elektronisches Kraftfahrzeug-Kennzeichen ausgebildet, welches an einem Kraftfahrzeug angebracht ist oder welches einen integralen Bestandteil des Kraftfahrzeugs bildet.

Beispielsweise kann die elektronische Schaltung 104 eine Schnittstelle zu einem Kraftfahrzeug-Elektronikgerät aufweisen, welches die auszugebende Information an die Schnittstelle der elektronischen Schaltung 104 in regelmäßigen oder unregelmäßigen Zeitabständen sendet. Bei dem Kraftfahrzeug-Elektronikgerät kann es sich beispielsweise um eine sogenannte Electronic Control Unit (ECU) handeln. Das Kraftfahrzeug-Elektronikgerät kann über ein Kraftfahrzeug-Bussystem mit der elektronischen Schaltung 104 vernetzt sein, um über das Kraftfahrzeug-Bussystem die auszugebende Information zu übertragen.

Beispielsweise kann das Kraftfahrzeug-Elektronikgerät zur Erfassung eines Fahrzeug-Parameters dienen, und zwar auf der Basis von Sensorsignalen. Beispielsweise dient ein Sensor zur Erfassung eines aktuellen Abgaswerts des Kraftfahrzeugs. Dieser aktuelle Abgaswert wird in Form einer Information von dem Kraftfahrzeug-Elektronikgerät an die elektronische Schaltung 104 übertragen, sodass der Abgaswert über die Anzeige 102 ausgegeben wird. Entsprechend kann für weitere Fahrzeugparameter, wie zum Beispiel die Geschwindigkeit, den aktuell von dem Kraftfahrzeug erzeugten Lärmpegel oder andere Umwelt- und/oder sicherheitsrelevante Fahrzeugparameter verfahren werden.

Alternativ oder zusätzlich ist das Kraftfahrzeug-Elektronikgerät zur Bestimmung eines Gebührenstatus ausgebildet. Beispielsweise wird durch das Kraftfahrzeug-Elektronikgerät festgestellt, ob eine erforderliche Gebühr, wie zum Beispiel eine Mautgebühr, eine Steuer oder eine Abgasgebühr, für das Kraftfahrzeug entrichtet worden ist oder zu entrichten ist. Eine entsprechende Information, die den Gebührenstatus angibt, wird von dem Kraftfahrzeug-Elektronikgerät an die elektronische Schaltung 104 ausgegeben, sodass diese Information über die Anzeige 102 ausgegeben wird.

Dementsprechend kann das Lesegerät 108 zur Erfassung der Information, die über die Anzeige 102 ausgegeben wird, von dem stehenden und/oder von dem fahrenden Kraftfahrzeug ausgebildet sein. Das Lesegerät 108 kann über ein Netzwerk mit einem zentralen Servercomputer verbunden sein, in dem die von der Anzeige 102 erfasste Information ausgewertet wird.

Bei den ersten Daten 106 kann es sich hier um das amtliche Kraftfahrzeug-Kennzeichen handeln. Auf der Anzeige 102 wird also visuell sichtbar das amtliche Kraftfahrzeug-Kennzeichen ausgegeben sowie zusätzlich eine oder mehrere weitere Informationen, die visuell ohne ein Lesegerät nicht wahrnehmbar sind. Bei dieser Ausführungsform kann eine Aktualisierung des amtlichen Kennzeichens dadurch erfolgen, dass eine Aktualisierung der Daten 106 vorgenommen wird, beispielsweise indem Daten, die das aktualisierte amtliche Kennzeichen beinhalten, von dem Kraftfahrzeug-Elektronikgerät über das Kraftfahrzeug-Bussystem an die elektronische Schaltung 104 gesendet werden, welches die Daten 106 dann mit den empfangenen Daten überschreibt

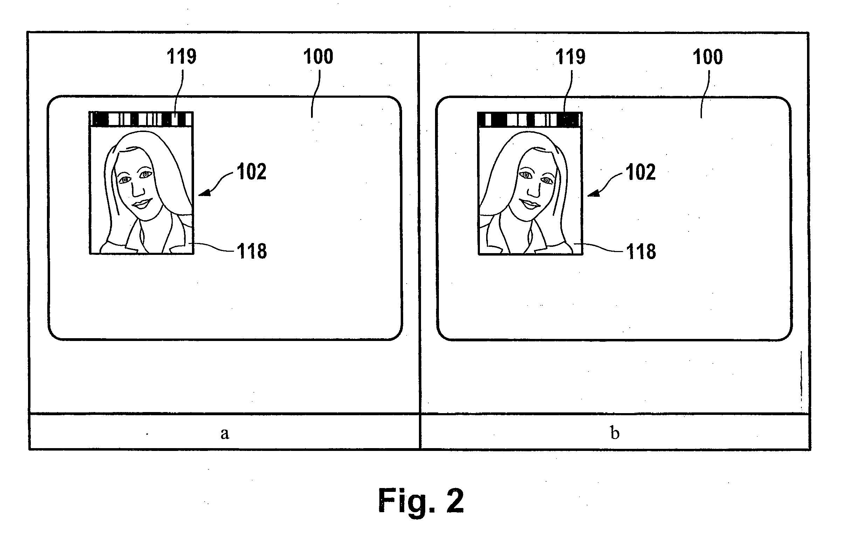

Die Figur 2 zeigt ein diesbezügliches Ausführungsbeispiel. Das Dokument 100 ist in dieser Ausführungsform kartenförmig ausgebildet. Beispielsweise handelt es sich um eine Chipkarte oder um einen Personalausweis.

Die Anzeige 102 des Dokuments 100 hat einen ersten Teilbereich 118, der zur Wiedergabe der Daten 106 dient. Ferner hat die Anzeige 102 einen Teilbereich 119, der zur Ausgabe der Daten 107 dient. Der Teilbereich 119 wird dabei durch die oberste Zeile der Anzeige 102 gebildet.

Beispielsweise beinhalten die Daten 106 hier eine Bildsequenz bestehend aus Gesichtsbildern, die aus verschiedenen Ansichten aufgenommen worden sind. In einer ersten Bildwiederholperiode, die in der Figur 2a dargestellt ist, wird ein erstes Bild der Bildsequenz in dem Teilbereich 118 wiedergegeben. Gleichzeitig werden in dem Teilbereich 119, d.h. in der ersten Zeile der Anzeige 102, ein Teil der Daten 107 ausgegeben. Dies erfolgt hier in Form eines eindimensionalen Musters, insbesondere in Form eines eindimensionalen Barcodes.

Der Teilbereich 119 mit dem dort wiedergegebenen Barcode ist in der Figur 2 vergrößert dargestellt; tatsächlich ist der Teilbereich 119 mit dem dort wiedergegebenen Barcode kaum oder nicht durch einen Benutzer mit dem bloßen Auge visuell wahrnehmbar. Dies ist insbesondere dann der Fall, wenn der Teilbereich 119 an einem Rand der Anzeige 102 angeordnet ist, wie das bei der Ausführungsform der Figur 2 der Fall ist.

Die Figur 2b zeigt das Dokument 100 zu einem späteren Zeitpunkt, d.h. zu einer späteren Bildwiederholperiode. Zu diesem späteren Zeitpunkt kann ein anderes Bild der Bildsequenz in dem Teilbereich 118 wiedergegeben werden. Ferner kann der Teilbereich 119 ein anderes Muster, d.h. insbesondere einen anderen Barcode, zur Ausgabe anderer der Daten 107, anzeigen.

Zu den in den Figuren 2a und 2b dargestellten Zeitpunkten werden also verschiedene Teile der Daten 107 ausgegeben. Alternativ ist es auch möglich, dass jeweils alle Daten 107 innerhalb einer Bildwiederholperiode in dem Teilbereich 119 ausgegeben werden. In diesem Fall haben sich die Daten 107 von dem in der Figur 2a gezeigten Zeitpunkt zu dem in der Figur 2b gezeigten Zeitpunkt geändert.

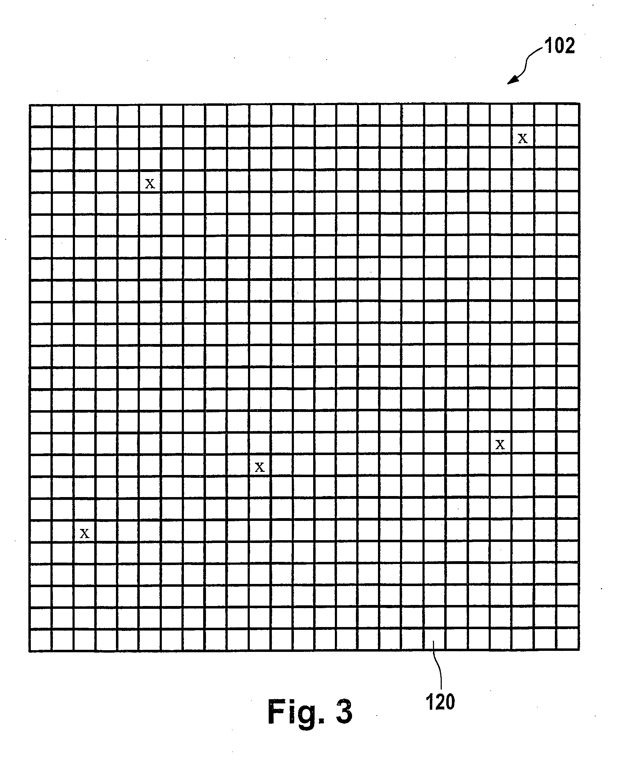

Die Figur 3 zeigt eine schematische Draufsicht auf eine erfindungsgemäße Anzeige 102. Die Anzeige 102 besteht aus einer Matrixanordnung von prinzipiell gleich aufgebauten Anzeigeelementen 120. Die in der Fig. 3 mit "x" gekennzeichneten Anzeigeelemente 120 bilden hier den Teilbereich 119 zur Ausgabe der Daten 107, wohingegen die nicht mit einem "x" gekennzeichneten Anzeigeelemente 120 zur Wiedergabe der Daten 106 dienen.

Bei dieser Ausführungsform sind also einzelne der Anzeigeelemente 120, die in der Ebene der Anzeige 102 beliebig verteilt angeordnet sein können, für die Ausgabe der Daten 107 vorgesehen. Sofern die Anzahl dieser, den Teilbereich 119 bildenden Anzeigeelemente 120 nicht über ca. 2 % der Gesamtanzahl der Anzeigeelemente 120 liegt, werden diese von einem Benutzer visuell kaum oder nicht in der Wiedergabe der Daten 106 wahrgenommen. Bevorzugt ist, dass die Anzahl der Anzeigeelemente 120 der Teilmenge 120 deutlich unter 2 %, besonders bevorzugt deutlich unter 0,2 % der Gesamtanzahl liegt.

Dies ist insbesondere dann der Fall, wenn die Anzeigeelemente, die den Teilbereich 119 für die Ausgabe der Daten 107 bilden, voneinander beabstandet, also nicht unmittelbar benachbart, auf der Anzeige 102 angeordnet sind.

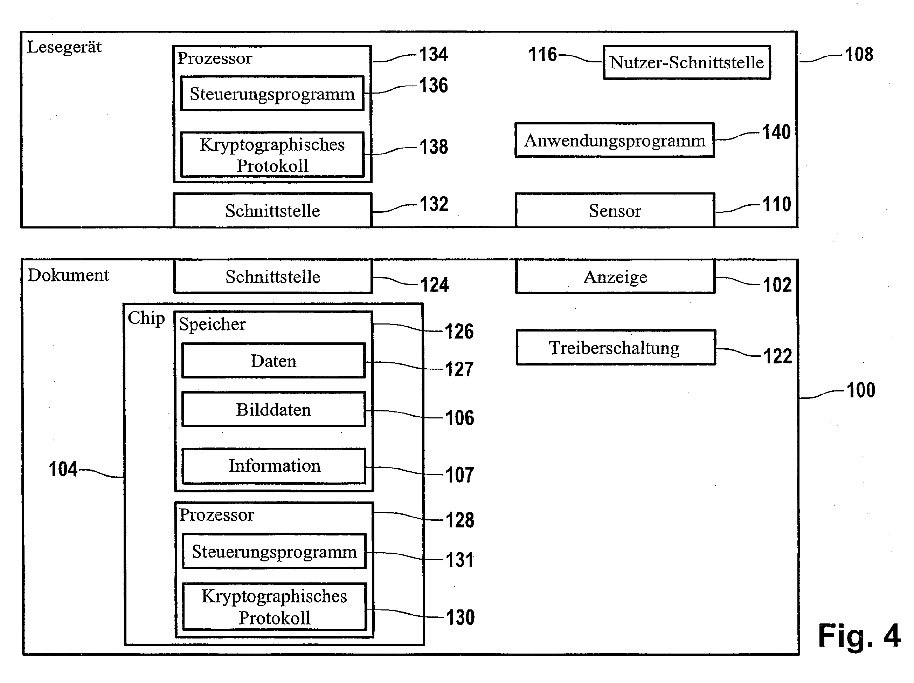

In einer Ausführungsform erzeugt das Lesegerät zufällig ein Muster, welches den Teilbereich 119 bestimmen soll. Das Muster kann beispielsweise eine Angabe der Zeilen/Spaltenkoordinaten der Anzeigelemente 120 beinhalten, die den Teilbereich 119 bilden sollen, also etwa die mit "x" gekennzeichneten Anzeigeelemente in der Ausführungsform der Fig. 3. Dieses Muster wird durch eine Nachricht von dem Lesegerät 108 an das Dokument 100 mitgeteilt, insbesondere über die Schnittstellen 132 und 124 (vgl. Ausführungsform der Fig. 4). Die elektronische Schaltung 104 (vgl. Ausführungsformen der Fig. 1 und 4) steuert dann die durch das Muster spezifizierten Anzeigelemente 120 der Anzeige 102 zur Ausgabe der zweiten Daten 107 an, wohingegen die übrigen Anzeigelemente 102 zur Wiedergabe der Daten 106 angesteuert werden. Der Vorteil dieser erfindungsgemäßen Ausführungsform ist, dass neben der sicheren Übertragung der Daten über den Teilbereich 119 auch ein Echtheitsnachweis der elektronischen Schaltung 104.

Die Figur 4 zeigt eine weitere Ausführungsform des Dokuments 100 und des Lesegeräts 108.

Das Dokument 100 hat eine Treiberschaltung 122 zur Ansteuerung der Anzeige 102. Die elektronische Schaltung 104 des Dokuments 100 ist hier als Chip, insbesondere als RFID-Chip, ausgebildet. Die elektronische Schaltung 104 ist mit einer Schnittstelle 124 des Dokuments 100 zur Kommunikation mit dem Lesegerät 108 verbunden. Die Schnittstelle 124 kann beispielsweise ein oder mehrere Antennenwindungen, die z.B. in einem Randbereich des Dokuments 100 verlaufen, aufweisen.

Die Schaltung 104 hat einen elektronischen Speicher 126 zur Speicherung von schutzbedürftigen Daten 127. Bei den schutzbedürftigen Daten 127 kann es sich beispielsweise um biometrische Daten des Trägers des Dokuments 100, wie zum Beispiel Fingerabdruckdaten oder Iris-Scandaten handeln. Die schutzbedürftigen Daten 127 sind in einem besonders geschützten Speicherbereich des Speichers 126 gespeichert.

Ferner sind in demselben Speicher 126 oder einem anderen elektronischen Speicher des Dokuments 100 die Daten 106 und 107 gespeichert. Die Schaltung 104 hat ferner einen Prozessor 128 zur Ausführung von Programminstruktionen 130, durch welche die das Dokument 100 betreffenden Schritte eines kryptographischen Protokolls implementiert werden. Der Prozessor 128 dient ferner zur Ausführung von Programminstruktionen 131, die ein Steuerungsprogramm implementieren.

Das Lesegerät 108 hat einen optischen Sensor 110 zur Erfassung der Bildwiedergabe der Anzeige 102 und zum Empfang des von der Anzeige 102 abgesendeten modulierten optischen Signals. Bei dem optischen Sensor 110 kann es sich um einen CCD-Sensor oder einen Scanner handeln.

Das Lesegerät 108 hat ferner eine Schnittstelle 132, die der Schnittstelle 124 des Dokuments 100 entspricht. Beispielsweise ist also die Schnittstelle 132 für eine RFID-Kommunikation mit dem Dokument 100 bzw. dessen Schaltung 104 ausgebildet.

Das Dokument 108 hat zumindest einen Prozessor 134 zur Ausführung eines Steuerungsprogramms 136 sowie von Programminstruktionen 138, durch welche die das Lesegerät 108 betreffenden Schritte des kryptographischen Protokolls implementiert werden. Das Lesegerät 108 kann ferner zur Ausführung eines Anwendungsprogramms 140 dienen. Das Anwendungsprogramm 140 kann auch von einem anderen Computersystem ausgeführt werden, welches mit dem Lesegerät 108 verbunden ist.

Das durch die Programminstruktionen 131 implementierte Steuerungsprogramm des Dokuments 100 ist so ausgebildet, dass es die Treiberschaltung 122 zur Wiedergabe der Daten 106 und zur Sendung des optischen Signals über den Teilbereich 119 (vgl. Fig. 2) ansteuert, um die in den Daten 107 beinhaltete Information zu dem Lesegerät 108 zu senden.

Zum Zugriff auf die Daten 127 des Speichers 126 erfasst das Lesegerät 108 zunächst mittels seines optischen Sensors 110 die Anzeige 102. Hierzu wird der Sensor 110 entsprechend von dem Steuerungsprogramm 136 angesteuert. Das Steuerungsprogramm 136 demoduliert das von dem Sensor 110 empfangene optische Signal, um so die Information zu empfangen. Auf diese Art und Weise erhält das Steuerungsprogramm 136 Kenntnis des kryptographischen Schlüssels.

Nach der Erfassung des kryptographischen Schlüssels aus der Wiedergabe der Daten 107 startet das Steuerungsprogramm 136 die Ausführung der Programminstruktionen 138, so dass das kryptographische Protokoll zwischen dem Lesegerät 108 und dem Dokument 100 mit Hilfe des kryptographischen Schlüssels durchgeführt wird. Beispielsweise handelt es sich bei dem kryptographischen Protokoll um ein Challenge-Response-Verfahren.

Das Challenge-Response-Verfahren kann beispielsweise so ablaufen, dass das Lesegerät 108 zunächst eine Anforderung der Daten an die Schnittstelle 124 des Dokuments 100 sendet. Daraufhin wird die Ausführung der Programminstruktionen 130 gestartet. Hierdurch wird seitens des Dokuments 100 z. B. eine Zufallszahl generiert, die mit einem Referenzwert des kryptographischen Schlüssels symmetrisch verschlüsselt wird, so dass ein Chiffrat resultiert. Die verschlüsselte Zufallszahl, d.h. das Chiffrat, wird von der Schnittstelle 124 des Dokuments 100 an die Schnittstelle 132 des Lesegeräts 108 gesendet.

Durch Ausführung der Programminstruktionen 138 wird seitens des Lesegeräts 108 das von dem Dokument 100 empfangene Chiffrat mit Hilfe des zuvor empfangenen kryptographischen Schlüssels entschlüsselt. Das Resultat der Entschlüsselung wird von der Schnittstelle 132 an die Schnittstelle 124 des Dokuments 100 gesendet.

Mit Hilfe der Programminstruktionen 130 wird dann seitens des Dokuments 100 geprüft, ob das Ergebnis der Entschlüsselung des Chiffrats, welche das Dokument von dem Lesegerät 108 empfangen hat, identisch ist mit der initial durch das Dokument 100 erzeugten Zufallszahl. Wenn dies der Fall ist, stimmt der Referenzwert des kryptographischen Schlüssels, der in den Programminstruktionen 130 beinhaltet ist, oder auf den diese zugreifen können, mit dem aus der Bildwiedergabe der Anzeige 102 durch das Lesegerät 108 erfassten kryptographischen Schlüssel überein, wodurch die Authentizität des Dokuments 100 und die Zugriffsberechtigung des Lesegeräts 108 gegeben ist.

Das Dokument 100 überträgt daraufhin die von dem Lesegerät 108 angeforderten Daten 127 des Speichers 126 von der Schnittstelle 124 zu der Schnittstelle 132. Diese Daten können von dem Steuerungsprogramm 136 an das Anwendungsprogramm 140 für eine Weiterverarbeitung übertragen werden. Beispielsweise werden die Daten auf einer Bildschirmmaske ausgegeben.

Bevor die Daten aus dem Speicher 126 an das Lesegerät 108 übertragen werden, können weitere Überprüfungen erforderlich sein, wie z.B. nach einem EAC Verfahren. Alternativ oder zusätzlich kann auch ein kryptographisches Protokoll basierend auf einem asymmetrischen Schlüssel zum Einsatz kommen.

### Bezugszeichenliste

- 100: Dokument
- 102: Anzeige
- 104: Schaltung
- 106: Daten
- 107: Daten
- 108: Lesegerät
- 110: Sensor
- 112: Schaltung
- 114: Aufdruck
- 116: Nutzerschnittstelle
- 118: Teilbereich
- 119: Teilbereich
- 120: Anzeigeelement
- 122: Treiberschaltung
- 124: Schnittstelle
- 126: Speicher
- 127: Daten
- 128: Prozessor
- 130: Programminstruktionen
- 131: Programminstruktionen
- 134: Prozessor
- 136: Steuerungsprogramm
- 138: Programminstruktionen
- 140: Anwendungsprogramm

## Patentansprüche

1. Dokument mit einer integrierten Anzeigevorrichtung (102), einem elektronischen Speicher (126) zur Speicherung erster (106) und zweiter (107) Daten, und mit Ansteuerungsmitteln (104; 122, 128, 131) zur Ansteuerung der Anzeigevorrichtung für eine Wiedergabe der ersten Daten, wobei die Ansteuerungsmittel zur Ansteuerung eines Teilbereichs (119) der Anzeigevorrichtung ausgebildet sind, um die zweiten Daten über den Teilbereich auszugeben, wobei die Größe des Teilbereichs so gewählt ist, dass die Ausgabe der zweiten Daten über den Teilbereich visuell nicht wahrnehmbar ist, **dadurch gekennzeichnet, dass** die Anzeigevorrichtung eine Vielzahl von Anzeigeelementen beinhaltet, die in einer Matrix angeordnet sind, wobei es sich bei der Anzeigevorrichtung um eine Passiv- oder Aktiv-Matrixanzeige handelt, wobei es sich bei dem Teilbereich um eine einzelne Zeile der Matrix und/oder eine einzelne Spalte der Matrix der Anzeigevorrichtung handelt.

2. Dokument nach Anspruch 1, wobei die Ansteuerungsmittel zur Ansteuerung des Teilbereichs der Anzeigevorrichtung ausgebildet sind, um ein maschinenlesbares optisches Signal über den Teilbereich abzusenden, wobei das maschinenlesbare optische Signal die zweiten Daten beinhaltet, wobei die Ausgabe der Daten durch Wiedergabe eines Musters in dem Teilbereich der Anzeigevorrichtung erfolgt

3. Dokument nach Anspruch 2, wobei die Ansteuerungsmittel zur Modulation des maschinenlesbaren optischen Signals ausgebildet sind, wobei die Modulation insbesondere mit Hilfe eines Pulscode-Modulationsverfahrens, eines Amplituden-Modulationsverfahrens, eines Frequenz-Modulationsverfahrens und/oder eines Phasen-Modulationsverfahrens erfolgt.

4. Dokument nach einem der vorhergehenden Ansprüche, wobei die zweiten Daten eine Personalisierungsinformation, ein Sicherheitsmerkmal und/oder einen kryptographischen Schlüssel beinhalten.

5. Dokument nach einem der vorhergehenden Ansprüche, mit einem geschützten Speicherbereich zur Speicherung weiterer Daten (127) und mit Mitteln (130) zur Ausführung eines kryptographischen Protokolls und mit einer Schnittstelle (124) zu einem Lesegerät (108), wobei ein Zugriff des Lesegeräts auf die weiteren Daten über die Schnittstelle die Ausführung des kryptographischen Protokolls mit Hilfe eines in den zweiten Daten beinhalteten oder aus diesen ableitbaren kryptographischen Schlüssels voraussetzt.

6. Dokument nach einem der vorhergehenden Ansprüche, wobei die Ansteuerungsmittel zum Empfang einer Nachricht von einem Lesegerät (108) ausgebildet sind, und wobei die Nachricht den Teilbereich spezifiziert.

7. Dokument nach einem der vorhergehenden Ansprüche, wobei es sich um ein Wert- oder Sicherheitsdokument und/oder um ein elektronisches Kennzeichen, insbesondere ein elektronisches Kraftfahrzeugkennzeichen, handelt.

8. Dokument nach einem der vorhergehenden Ansprüche, wobei es sich bei den ersten Daten (106) um ein Kennzeichen eines Fahrzeugs und bei den zweiten Daten (107) um einen Fahrzeugparameter und/oder einen Gebührenstatus handelt.

9. Lesegerät mit einem Dokument nach einem der vorhergehenden Ansprüche, mit einem optischen Sensor (102) zur maschinellen Erfassung der über den Teilbereich des Dokuments ausgegebenen Daten mit Mitteln (136) zur Verifikation des Dokuments mit Hilfe der von der Anzeigevorrichtung erfassten zweiten Daten , mit Mitteln (112; 134) zur Übertragung einer Nachricht für das Dokument, wobei die Nachricht den Teilbereich spezifiziert.

10. Lesegerät nach Anspruch 9, mit einem Zufallsgenerator zur Auswahl des Teilbereichs.

11. Lesegerät nach einem der vorhergehenden Ansprüche 9 oder 10, mit Mitteln (138) zur Ausführung eines kryptographischen Protokolls und einer Schnittstelle (132) zur Kommunikation mit dem Dokument, wobei ein Zugriff auf die weiteren Daten (127) des Dokuments voraussetzt, dass das kryptographische Protokoll mit Hilfe der zweiten Daten erfolgreich durchgeführt worden ist.

12. Verfahren zur Verifikation eines Dokuments nach einem der Ansprüche 1 bis 8, mit folgenden Schritten:
- maschinelle Erfassung der über den Teilbereich des Dokuments ausgegebenen zweiten Daten,
- Vergleich der zweiten Daten mit einer Referenz-Information.

## Claims

1. A document comprising a built-in display device (102), an electronic memory (126) for storing first data (106) and second data (107), and comprising control means (104; 122, 128, 131) for controlling the display device in order to reproduce the first data, wherein the control means are configured to control a subarea (119) of the display device in order to output the second data via the subarea, wherein the size of the subarea is selected such that the output of the second data via the subarea is not visually perceptible, **characterised in that** the display device contains a plurality of display elements, which are arranged in a matrix, wherein the display device is a passive or active matrix display, wherein the subarea is an individual row of the matrix and/or an individual column of the matrix of the display device.

2. The document according to claim 1, wherein the control means for controlling the subarea of the display device are configured to send a machine-readable optical signal via the subarea, wherein the machine-readable optical signal contains the second data, wherein the data are output by reproduction of a pattern in the subarea of the display device.

3. The document according to claim 2, wherein the control means are configured for modulation of the machine-readable optical signal, wherein the modulation is performed in particular with the aid of a pulse code modulation method, an amplitude modulation method, a frequency modulation method and/or a phase modulation method.

4. The document according to one of the preceding claims, wherein the second data contain an item of personalisation information, a security feature and/or a cryptographic key.

5. The document according to one of the preceding claims, comprising a protected memory area for storing further data (127), and comprising means (130) for executing a cryptographic protocol and comprising an interface (124) to a reader (108), wherein access to the further data via the reader presupposes the execution of the cryptographic protocol with the aid of a cryptographic key contained in the second data or derivable therefrom.

6. The document according to one of the preceding claims, wherein the control means are configured to receive a message from a reader (108), and wherein the message specifies the subarea.

7. The document according to one of the preceding claims, wherein the document is a document of value or a security document and/or an electronic identification, in particular an electronic vehicle registration number.

8. The document according to one of the preceding claims, wherein the first data (106) are an identification of a vehicle and the second data (107) are a vehicle parameter and/or a fee status.

9. A reader comprising a document according to one of the preceding claims, comprising an optical sensor (102) for automatically detecting the data output via the subarea of the document, comprising means (138) for verifying the document with the aid of the second data detected with the aid of the display device, and comprising means (112; 134) for transmitting a message for the document, wherein the message specifies the subarea.

10. The reader according to claim 9, comprising a random generator for selecting the subarea.

11. The reader according to one of preceding claims 9 or 10, comprising means (138) for executing a cryptographic protocol and comprising an interface (132) for communicating with the document, wherein access to the further data (127) of the document presupposes that the cryptographic protocol has been executed successfully with the aid of the second data.

12. A method for verifying a document according to one of claims 1 to 8, comprising the following steps:
- automatically detecting the second data output via the subarea of the document,
- comparing the second data with an item of reference information.

## Revendications

1. Document avec un dispositif d'affichage (102) intégré, une mémoire électronique (126) pour l'enregistrement de premières (106) et de deuxièmes données (107), et avec des moyens de commande (104 ; 122, 128, 131) pour la commande du dispositif d'affichage en vue d'une reproduction des premières données, dans lequel les moyens de commande sont conçus pour commander une région partielle (119) du dispositif d'affichage, afin d'éditer les deuxièmes données par le biais de la région partielle, dans lequel la taille de la région partielle est choisie de manière à ce que l'édition des deuxièmes données par le biais de la région partielle ne soit pas perceptible visuellement, **caractérisé en ce que** le dispositif d'affichage contient une multitude d'éléments d'affichage agencés dans une matrice, dans lequel le dispositif d'affichage est un affichage à matrice passive ou active, dans lequel la région partielle est une seule ligne de la matrice et/ou une seule colonne de la matrice du dispositif d'affichage.

2. Document selon la revendication 1, dans lequel les moyens de commande sont conçus pour commander la région partielle du dispositif d'affichage afin d'envoyer un signal optique lisible par machine par le biais de la région partielle, dans lequel le signal optique lisible par machine contient les deuxièmes données, dans lequel l'édition des données est effectuée par la reproduction d'un motif dans la région partielle du dispositif d'affichage.

3. Document selon la revendication 2, dans lequel les moyens de commande sont conçus pour moduler le signal optique lisible par machine, dans lequel la modulation est effectuée en particulier à l'aide d'un procédé de modulation par impulsions codées, d'un procédé de modulation d'amplitude, d'un procédé de modulation de fréquence et/ou d'un procédé de modulation de phase.

4. Document selon l'une des revendications précédentes, dans lequel les deuxièmes données contiennent une information de personnalisation, une marque de sécurité et/ou une clé cryptographique.

5. Document selon l'une des revendications précédentes, avec une région d'enregistrement protégée pour l'enregistrement de données supplémentaires (127) et avec des moyens (130) pour l'exécution d'un protocole cryptographique et avec une interface (124) vers un dispositif de lecture (108), dans lequel l'accès du dispositif de lecture aux données supplémentaires par le biais de l'interface suppose l'exécution du protocole cryptographique à l'aide d'une clé cryptographique contenue dans les deuxièmes données ou susceptible d'être déduite de celles-ci.

6. Document selon l'une des revendications précédentes, dans lequel les moyens de commande sont conçus pour recevoir un message de la part d'un dispositif de lecture (108), et dans lequel le message spécifie la région partielle.

7. Document selon l'une des revendications précédentes, dans lequel il s'agit d'un document de valeur ou de sécurité et/ou d'une immatriculation électronique, en particulier d'une immatriculation électronique de véhicule automobile.

8. Document selon l'une des revendications précédentes, dans lequel les premières données (106) sont une immatriculation d'un véhicule et les deuxièmes données (107) sont un paramètre de véhicule et/ou un statut de redevance.

9. Dispositif de lecture avec un document selon l'une des revendications précédentes, avec un capteur optique (102) pour la détection par machine des données éditées par le biais de la région partielle du document, avec des moyens (136) pour la vérification du document à l'aide des deuxièmes données détectées par le dispositif d'affichage, avec des moyens (112 ; 134) pour la transmission d'un message pour le document, dans lequel le message spécifie la région partielle.

10. Dispositif de lecture selon la revendication 9, avec un générateur aléatoire pour la sélection de la région partielle.

11. Dispositif de lecture selon l'une des revendications précédentes 9 ou 10, avec des moyens (138) pour l'exécution d'un protocole cryptographique et une interface (132) pour la communication avec le document, dans lequel un accès aux données supplémentaires (127) du document suppose que le protocole cryptographique a été exécuté avec succès à l'aide des deuxièmes données.

12. Procédé pour la vérification d'un document selon l'une des revendications 1 à 8, avec les étapes suivantes :
- détection par machine des deuxièmes données éditées par le biais de la région partielle du document,
- comparaison des deuxièmes données avec une information de référence.
